# EUROPEAN PATENT APPLICATION

(11) **EP 4 582 500 A1**
(43) Date of publication of application: **09.07.2025**
(21) Application number: 23859746.2
(22) Date of filing: 25.05.2023
(51) Int. Cl.: C09D 11/30, B41J 2/01, B41M 5/00, C08F 2/44, C08F 2/50, C08F 20/00, C09D 11/38

(54) **PHOTOCURABLE INK-JET INK COMPOSITION**

(30) Priority: 30.08.2022 JP 2022136835
(71) Applicant: Sakata INX Corporation, Osaka-shi, Osaka 550-0002 (JP)
(72) Inventor: KAWAMOTO, Kenji, Osaka-shi, Osaka 550-0002 (JP); NITTA, Ryoichi, Osaka-shi, Osaka 550-0002 (JP); NAKASHIMA, Okinori, Osaka-shi, Osaka 550-0002 (JP)
(74) Representative: Müller-Boré & Partner Patentanwälte PartG mbB
(86) International application number: PCT/JP2023/019542
(87) International publication number: WO 2024/047976

(57) **Abstract**

To produce a photocurable inkjet ink composition that can have a lower viscosity as an inkjet ink composition, have sufficiently high reactivity, and decrease a substance migrating to another surface in contact with the surface of a cured photocurable inkjet ink composition. To achieve this, provided is a photocurable inkjet ink composition containing the following A to E, wherein the ratio A/D ranges from 1/9 to 9/1, the total content of A and D in the ink composition ranges from 5 to 40%, and in the ink composition, a content of a photopolymerization initiator with a molecular weight of less than 500 is less than 0.2%, a viscosity is 100 cps or less, and a surface tension is 32.0 mN/m or less.
A. an ethylenic unsaturated bond-containing polymeric initiator of photopolymerization
B. a thioxanthone-based polymeric photosensitizer with a molecular weight of 500 or more
C. a (meth)acrylate-based compound
D. an amine-modified oligomer with a weight-average molecular weight in the range of 500 to 3,000 and a viscosity of less than 4,000 cps, and
E. a surface conditioner

## Description

### Technical Field

The present invention relates to a photocurable inkjet ink composition.

### Background Art

Photocurable inkjet ink compositions are classified into a solvent type containing a solvent and a solvent-free type containing no solvent. Solvent-free type inkjet ink compositions are typically photocurable inkjet ink compositions.

In printing using a solvent-type inkjet ink composition, the ink composition must be dried or solidified after printing, and without such a step a printed material after printing is difficult to process in the subsequent processing step.

In a printing step in consideration of such post-processing, solvent-free photocurable inkjet ink compositions are preferably used among photocurable inkjet ink compositions. To immediately cure a photocurable inkjet ink composition to immediately perform processing after printing, a low-molecular-weight photopolymerization initiator with particularly high reactivity has been selected among photopolymerization initiators.

When such a low-molecular-weight photopolymerization initiator with high reactivity is used, however, a component derived from the photopolymerization initiator, such as an unreacted initiator or an initiator fragment, may migrate from a coating film of a photocurable inkjet ink composition after photocuring.

To address the above problems, as described in Patent Literature 1, there is a known inkjet composition containing a specific acylphosphine oxide compound as a photopolymerization initiator to decrease the migration amount.

As described in Patent Literature 2, there is also a known inkjet ink composition that contains a specific compound with four amide bonds, and contains a photopolymerization initiator with a molecular weight in the range of 400 to 2,000.

As described in Patent Literature 3, there is also a known inkjet ink composition that contains a polymeric initiator with an acylphosphine structure, a polymerizable compound, and a colorant, and has less migration.

It is also known that OMNIPOL TX can be contained as a sensitizer, and tripropylene glycol diacrylate or EO-modified trimethylolpropane triacrylate can be used as a polymerizable compound.

However, a photocurable inkjet ink composition may have an increased viscosity when the composition contains a photopolymerization initiator with an increased molecular weight from the perspective of preventing migration to another article as in the invention described in such patent literature.

### Background Art Literature

### Patent Literature

Patent Literature 1: International Publication No. WO 2018-047484
Patent Literature 2: Japanese Unexamined Patent Application Publication No. 2014-240464
Patent Literature 3: Japanese Unexamined Patent Application Publication No. 2014-185319

### Summary of the Invention

### Problems to Be Solved by the Invention

The present invention has been made in view of the above circumstances and can provide a photocurable inkjet ink composition with a specific composition by adding a specific photopolymerization initiator to the photocurable inkjet ink composition, wherein the photocurable inkjet ink composition can have an appropriate viscosity as an inkjet ink composition, can realize sufficiently high reactivity, and can decrease the amount of a migration substance generated from a coating film of the cured photocurable inkjet ink composition.

### Means for Solving the Problems

The present inventors have completed the following invention by finding that the above problems can be solved by the following photocurable inkjet ink composition.
1. A photocurable inkjet ink composition containing the following A to E, wherein a ratio A/D ranges from 1/9 to 9/1, a total content of A and D in the ink composition ranges from 5 to 40%, and in the ink composition, a content of a photopolymerization initiator with a molecular weight of less than 500 is less than 0.2%, a viscosity is 100 cps or less, and a surface tension is 32.0 mN/m or less.
   A. an ethylenic unsaturated bond-containing polymeric initiator of photopolymerization
   B. a thioxanthone-based polymeric photosensitizer with a molecular weight of 500 or more
   C. a (meth)acrylate-based polymerizable compound
   D. an amine-modified photopolymerizable oligomer with a weight-average molecular weight in the range of 500 to 3,000 and a viscosity of less than 4,000 cps
   E. a surface conditioner
2. The photocurable inkjet ink composition according to 1, wherein a content of a sensitizer with a molecular weight of less than 500 is less than 0.2%.
3. The photocurable inkjet ink composition according to 1 or 2, containing a pigment with an average particle size of 500 nm or less.

### Effects of the Invention

The present invention can provide a photocurable inkjet ink composition that has sufficiently high reactivity, good anti-migration property that can be sufficiently used in food packaging applications, high adhesion to a resin film, high LED curability, and high metal halide lamp curability. In particular, even when a polymeric initiator is contained, the viscosity can be adjusted to an appropriate value.

In the present invention, in a printed area formed by printing and curing a photocurable inkjet ink composition, all initiator-derived components that have passed through a base material and migrated to a simulated food (aqueous ethanol), including an unreacted initiator and an initiator fragment, are referred to as migration components.

### Mode for Carrying Out the Invention

A photocurable inkjet ink composition according to the present invention (hereinafter sometimes referred to simply as an "ink composition") is used for the same applications as known photocurable inkjet ink compositions. Also, in the present description, all polymerizable components in the present invention are monomers and oligomers contained in the ink composition, and are all components that react with each other and are polymerized at the time of curing. And, "(meth)acrylate" refers to "acrylate and/or methacrylate", "(meth)acrylamide" refers to "acrylamide and/or methacrylamide", and "(meth)acrylic acid" refers to "acrylic acid and/or methacrylic acid".

Furthermore, a photocurable inkjet ink composition in the present invention is for printing and is not for forming a three-dimensional shaped object.

### <A. Polymeric Photopolymerization Initiator with Ethylenically Unsaturated Bond>

A photocurable inkjet ink composition according to the present invention contains an ethylenic unsaturated bond-containing polymeric initiator of photopolymerization. And, in the present invention, one or two or more polymeric photopolymerization initiators with an ethylenically unsaturated bond can be contained in a photocurable inkjet ink composition.

An ethylenically unsaturated bond in a polymeric photopolymerization initiator with the ethylenically unsaturated bond is one or two or more bonds selected from the group consisting of a (meth)acrylamide group, a (meth)acrylate group, a vinyl group, a vinyl ether group, a methyl vinyl ether group, an allyl group, a (meth)allyl ether group, and a maleimide group. Also, when an ethylenic unsaturated bond-containing polymeric initiator of photopolymerization has two or more ethylenic unsaturated bonds, the bonds may be the same or different. Furthermore, it is preferable to have at least one (meth)acrylamide group as an ethylenically unsaturated bond. When an ethylenic unsaturated bond-containing polymeric initiator of photopolymerization is a radical-based photopolymerization initiator, the (meth)acrylamide group shifts the absorption wavelength of light to the long wavelength side, eliminates the need for a short wavelength light beam with high energy and high risk, thereby improving the safety of a photocuring reaction, and enhances the photocurability of a photocurable inkjet ink composition containing the (meth)acrylamide group due to high polymerizability of the (meth)acrylamide group. In a combined use with a cationic-based photopolymerization initiator or an anionic-based photopolymerization initiator serving as an ethylenic unsaturated bond-containing polymeric initiator of photopolymerization, the (meth)acrylamide group, which has high hydrolysis resistance both under acidic conditions and under basic conditions, improves the stability of the composition before curing and the durability of a cured product after curing.

A photo-radical polymerization-initiating functional group used in an ethylenic unsaturated bond-containing polymeric initiator of photopolymerization generates an active radical by light irradiation and preferably has a hydrogen-abstraction type photo-radical polymerization-initiating functional group that can be present as a structural unit via a covalent bond in a cured product after a photopolymerization reaction. These photopolymerization-initiating functional groups may be used alone or in combination.

Furthermore, a thioxanthone-based polymeric photopolymerization initiator may or may not be used in combination.

The photo-radical polymerization-initiating functional group used in an ethylenic unsaturated bond-containing polymeric initiator of photopolymerization may be, as a hydrogen-abstraction type photopolymerization-initiating functional group, a group derived from a benzophenone derivative with a diaryl ketone skeleton, such as benzophenone, an alkyl diaminobenzophenone, 4,4'-bis(dimethylamino)benzophenone, or 4-benzoyl-4'-methyldiphenyl sulfide. Furthermore, a group derived from benzophenone is preferred from the perspective of both high photopolymerization initiation capability and high coloration resistance. These photopolymerization-initiating functional groups may be used alone or in combination.

When an ethylenic unsaturated bond-containing polymeric initiator of photopolymerization has a hydrogen-abstraction type photo-radical polymerization-initiating functional group, it is preferable to have a functional group that can be a hydrogen donor group in the molecule. The functional group that can be a hydrogen donor group is, for example, but is not limited to, an amide group, a urethane group, a urea group, a hydroxy group, a thiol group, a carboxylic acid, and the like. **In** particular, it is more preferable to have a urethane group with high coloration resistance. The functional group that can be a hydrogen donor group may be bonded directly to a photopolymerization-initiating functional group, but bonding via another functional group is particularly preferred because hydrogen abstraction can occur both intermolecularly and intramolecularly, and sufficient polymerization initiation capability is exhibited even for highly safe long-wavelength light with a wavelength of 360 nm or more.

An ethylenic unsaturated bond-containing polymeric initiator of photopolymerization has one or more repeating units constituted by a polyether skeleton, a divalent organic group having a urethane bond, and a benzophenone skeleton bonded to the organic group, and has one or more (meth)acrylamide units bonded to the repeating units. The interaction between the flexibility of the polyether skeleton and the toughness of the urethane bond improves the adhesion of the ink composition and a coating film after curing thereof to a resin film, allows the molecular weight of the polymeric photopolymerization initiator to be easily adjusted, and allows the viscosity of the ink composition to be appropriately adjusted. The present invention is based on the premise that such an ink composition and a coating film after curing thereof have high adhesion to a resin film.

An ethylenic unsaturated bond-containing polymeric initiator of photopolymerization preferably has a molecular weight in the range of 1,000 to 100,000 in terms of the number-averaged molecular weight. Furthermore, when the number-averaged molecular weight is 1,000 or more, an unreacted initiator, even if present, does not migrate. Furthermore, when the number-averaged molecular weight is 100,000 or less, the polarity (balance between hydrophilicity and hydrophobicity) of the obtained photopolymerization initiator can be easily adjusted, the solubility in each component used in a photocurable inkjet ink composition is high, the viscosity of a composition in which an ethylenic unsaturated bond-containing polymeric initiator of photopolymerization is dissolved can be controlled within a range suitable for various operations, such as coating, spraying, and extrusion, and the transparency of the photocurable inkjet ink composition can also be ensured.

The content of the ethylenic unsaturated bond-containing polymeric initiator of photopolymerization in an ink composition ranges from 1.0 to 40.0% by mass, preferably 1.5% by mass or more, more preferably 5.0% by mass or more, and preferably 37.0% by mass or less, more preferably 30.0% by mass or less.

Also, an ethylenic unsaturated bond-containing polymeric initiator of photopolymerization in the present invention has one or more ethylenic unsaturated bonds and one or more photopolymerization-initiating functional groups in the molecule. Furthermore, from the perspective of improving the photopolymerization initiation capability and the photocurability for long-wavelength light and from the perspective of reliably being incorporated into a cured product via a covalent bond after photopolymerization initiation, it is preferable to have two or more intramolecular ethylenic unsaturated bonds. Furthermore, the ratio of the number of ethylenic unsaturated bonds (groups) to the number of photopolymerization-initiating functional groups (the ratio of the number of ethylenically unsaturated groups to the number of photopolymerization-initiating functional groups) in the molecule preferably ranges from 1/10 to 10/1, more preferably 1/8 to 8/1, particularly preferably 1/5 to 5/1. When the ratio of the numbers is less than 0.1 (1/10), the photopolymerization rate of a photocurable inkjet ink composition can be significantly increased, although it depends on the photopolymerization initiator content of the photocurable inkjet ink composition. On the other hand, when the ratio of the numbers exceeds 10.0 (10/1), a photopolymerization initiator is not fixed as a structural unit in a cured product via a covalent bond even when a photopolymerization reaction (curing) is completed, and as a result, depending on the molecular weight of the photopolymerization initiator, a photopolymerization initiator with a low molecular weight is present in the cured product as a free low molecule, and issues of odor and discoloration over time of the cured product may not be fully resolved.

An ethylenic unsaturated bond-containing polymeric initiator of photopolymerization in the present invention is a compound having a high molecular weight and having one or more groups with an ethylenically unsaturated property and one or more groups with a photopolymerization initiation capability, and it is necessary to have each group in one polymer regardless of the structure of the polymer other than these groups. Such a structure can exhibit the advantages of the present invention.

A photo-radical polymerization-initiating functional group used in an ethylenic unsaturated bond-containing polymeric initiator of photopolymerization in the present invention may be any functional group that can generate an active radical by light irradiation. Examples thereof include hydrogen-abstraction type and electron-donating type photo-radical polymerization-initiating functional groups that can generate a radical by exchange of hydrogen or an electron after light absorption. Furthermore, a photopolymerization initiator preferably has a hydrogen-abstraction type photo-radical polymerization-initiating functional group from the perspective of being able to be present as a structural unit via a covalent bond in a cured product after a photopolymerization reaction and from the perspective of being easily industrially available and produced. These photopolymerization-initiating functional groups may be used alone or in combination.

Such an ethylenic unsaturated bond-containing polymeric initiator of photopolymerization in the present invention can be synthesized with reference to a method described in Japanese Patent No. 7016199.

And, examples of an ethylenic unsaturated bond-containing polymeric initiator of photopolymerization in the present invention include those with the ethylenically unsaturated group, with the number of ethylenically unsaturated groups/the number of benzophenone groups, and with the number-averaged molecular weight shown in Table 1 below.

**[Table 1]**

| No. | Ethylenically unsaturated group | | Number of ethylenically unsaturated groups/number of benzophenone groups | Number-averaged molecular weight |
|---|---|---|---|---|
| | Type | Number (average) | | |
| A-1 | Acrylamide group | 1 | 1/2 | 2100 |
| A-2 | Methacrylamide group | 1 | 1/1 | 6400 |
| A-3 | Acrylamide group | 2 | 2/1 | 8200 |
| A-4 | Acrylamide group | 2 | 4/1 | 12200 |
| | Vinyl group | 2 | | |
| A-5 | Acrylamide group | 2 | 1/2 | 5200 |
| A-6 | Methacrylamide group | 1 | 1/6 | 28400 |
| A-7 | Acrylamide group | 1 | 1/2 | 56600 |
| | Maleimide group | 1 | | |
| A-8 | Acrylamide group | 1 | 1/1 | 9500 |
| | Allyl group | 1 | | |
| A-9 | Acrylamide group | 2 | 1/1 | 4800 |
| A-10 | Acrylamide group | 1 | 1/3 | 8200 |
| | Acrylate group | 1 | | |
| A-11 | Acrylamide group | 2 | 2/1 | 3200 |
| A-12 | Methacrylamide group | 1 | 1/2 | 5500 |

A photopolymerization initiator that may or may not be used in combination with an ethylenic unsaturated bond-containing polymeric initiator of photopolymerization may be any photopolymerization initiator that receives an active energy ray and initiates polymerization without losing the advantages of the present invention. A polymeric photopolymerization initiator different from an ethylenic unsaturated bond-containing polymeric initiator of photopolymerization conventionally used in a photocurable inkjet ink composition, or a photopolymerization initiator that is not a polymer may be used.

Such a photopolymerization initiator is, for example, a benzoin ether-based photopolymerization initiator, an acetophenone-based photopolymerization initiator, an α-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator, a ketal-based photopolymerization initiator, a triazine-based photopolymerization initiator, an acylphosphine oxide-based photopolymerization initiator, and the like. Among these, a triazine-based photopolymerization initiator and an acylphosphine oxide-based photopolymerization initiator are preferred from the perspective of high curability for a light-emitting diode (LED) light. The photopolymerization initiators may be used alone or in combination.

Such a photopolymerization initiator is, for example, an ethoxy-modified glycerol triester of phenyl(2,4,6-trimethylbenzoyl)phosphinic acid (phenyl(2,4,6-trimethylbenzoyl)phosphinic acid glycerol ethoxylated triester) (Omnipol-TP (IGM Resins B.V.)), bis(2,4,6-trimethylbenzoyl)phenylphosphine oxide, ethoxy(2,4,6-trimethylbenzoyl)phenylphosphine oxide, benzophenone, diethylthioxanthone, 2-methyl-1-(4-methylthio)phenyl-2-morpholinopropan-1-one, 4-benzoyl-4'-methyldiphenyl sulfide, 1-chloro-4-propoxythioxanthone, isopropylthioxanthone, 2-hydroxy-2-methyl-1-phenylpropan-1-one, 1-hydroxycyclohexyl phenyl ketone, bis-2,6-dimethoxybenzoyl-2,4,4-trimethylpentylphosphine oxide, 1-[4-(2-hydroxyethoxy)-phenyl]-2-hydroxy-2-methyl-1-propan-1-one, 2,2-dimethyl-2-hydroxyacetophenone, 2,2-dimethoxy-2-phenylacetophenone, 2,4,6-trimethylbenzyl-diphenylphosphine oxide, 2-benzyl-2-dimethylamino-1-(morpholinophenyl)-butan-1-one, and the like. Furthermore, a thioxanthone-based polymeric photopolymerization initiator may or may not be used in combination.

As the photopolymerization initiator that is not a polymer, the content of a photopolymerization initiator with a molecular weight of less than 500 is preferably less than 0.20% by mass, more preferably less than 0.15% by mass, still more preferably less than 0.10% by mass. The content of the photopolymerization initiator with a molecular weight of less than 500 can be reduced to decrease the low-molecular-weight component content of an ink composition layer after photocuring, and reduce the occurrence of migration.

Furthermore, a polymeric photopolymerization initiator other than an ethylenic unsaturated bond-containing polymeric initiator of photopolymerization in the present invention may or may not be used in combination. Such a polymeric photopolymerization initiator has a number-averaged molecular weight of 450 or more and may be a polymer compound with a benzoyl group, a phosphonoyl group, an acyloximyl ketone group, and the like, a polymer including a low-molecular-weight photopolymerization initiator bonded to a skeleton of a polyether structure or polyester structure, a multimer of a low-molecular-weight photopolymerization initiator (Keycure POL-8150 (UV Chem-keys)), a photopolymerizable polymer compound bonded to a low-molecular-weight photopolymerization initiator (LoMicure 450 (BCH Bruhl Chemikalien Handel), and the like.

Further, a specific example of the polymeric initiator is, for example, poly(oxy-1,2-ethanediyl)α-(1-oxo-2-propenyl)-ω-(4-benzoyl-phenoxy)-, oligo[2-hydroxy-2-methyl-1-[4-(1-methylvinyl)phenyl]propanone], and the like.

### <B. Thioxanthone-based Polymeric Photosensitizer with Molecular Weight of 500 or More>

The thioxanthone-based polymeric photosensitizer with a molecular weight of 500 or more may be Omnipol TX ((2-carboxymethoxythioxanthone)-(poly(tetramethylene glycol) 250) diester) (number-averaged molecular weight: 660) (manufactured by IGM Resins B.V.), Genopol TX-1 (number-averaged molecular weight: 820) (manufactured by RaHN AG), and the like.

The thioxanthone-based polymeric photosensitizer with a molecular weight of 500 or more is preferably present in a content of 0.05 to 10.0 parts by mass per 100 parts by mass of the total polymerizable components in an active energy ray curable inkjet ink composition. The content is more preferably 0.1 parts by mass or more, still more preferably 0.2 parts by mass or more, and more preferably 8.0 parts by mass or less, still more preferably 6.0 parts by mass or less.

### (Other Polymeric Sensitizers)

In the present invention, other polymeric sensitizers can be used. Examples of acylphosphine-based polymeric sensitizers include SpeedCure 7010 (molecular weight: 1839) (manufactured by Lambson S.p.A.), oligo(2-hydroxy-2-methyl-1-(4-(1-methylvinyl)phenyl)propane) (manufactured by Lamberti, "ESACURE KIP 150", "ESACURE 1"), poly(ethylene glycol) 200-di(β-4(4-(2-dimethylamino-2-benzyl)butanonylphenyl)piperazine) (manufactured by IGM, "Omnipol 910"), (carboxymethoxymethoxybenzophenone)-(poly(ethylene glycol) 250) diesters (manufactured by IGM, "Omnipol BP"), and the like. These may be used alone or in combination.

In the present invention, a polymeric sensitizer can be contained to improve the curability in cooperation with a polymeric polymerization initiator, and a polymeric sensitizer that is less likely to migrate can decrease the content of volatile components and migration components remaining after curing.

### (Other Photosensitizers)

In the present invention, another non-polymeric sensitizer may or may not be contained without losing the advantages of the present invention. The thioxanthone-based photosensitizers may be used alone or in combination.

The thioxanthone-based photosensitizer may be 2,4-diethylthioxanthone, 2,4-diethylthioxanthen-9-one, 2-isopropylthioxanthone, 4-isopropylthioxanthone, and the like, and the thioxanthone-based photosensitizer may be "DETX" (trade name) (2,4-diethylthioxanthone), "ITX" (trade name) (Lambson Ltd.), and the like.

Furthermore, for example, an anthracene-based sensitizer, such as 9,10-dibutoxyanthracene, 9,10-diethoxyanthracene, 9,10-dipropoxyanthracene, or 9,10-bis(2-ethylhexyloxy)anthracene may be "DBA" or "DEA" (trade name) (all manufactured by Kawasaki Kasei Chemicals Ltd.). Furthermore, Omnirad EDB ethyl diethylaminobenzoate (IGM RESINS B.V.) can also be used.

It should be noted that an aminobenzoate compound described below is a sensitizer but is assumed to have the same action as D. (Meth)acrylic acid amide-based compound.

From the perspective of preventing excessive addition, when another sensitizer is contained, the other photosensitizer can be contained in a content of 0.3 to 10.0 parts by mass per 100 parts by mass of the total photopolymerizable components without losing the advantages of the present invention. Furthermore, the content may be 1.0 parts by mass or more and may be 9.0 parts by mass or less.

As another photosensitizer, the content of sensitizer with a molecular weight of less than 500 is preferably less than 0.20% by mass, more preferably less than 0.15% by mass, still more preferably less than 0.10% by mass. The content of the sensitizer with a molecular weight of less than 500 can be reduced to decrease the low-molecular-weight component content of an ink composition layer after photocuring and reduce the occurrence of migration.

### <C. (Meth)acrylate-based Polymerizable Compound>

C. (Meth)acrylate-based polymerizable compound in the present invention is one type of photopolymerizable compound, and one or more types of the following compounds can be used. It should be noted that D. Amine-modified photopolymerizable oligomer described later is not included. For C. (Meth)acrylate-based polymerizable compound, a monofunctional (meth)acrylate-based polymerizable compound or a polyfunctional (meth)acrylate-based polymerizable compound may be used as a monomer.
The C. (Meth)acrylate-based polymerizable compound content in the present invention is preferably 50.0% by mass or more, more preferably 60.0% by mass or more, still more preferably 65.0% by mass or more, based on the total photopolymerizable components. Furthermore, the content is preferably 97.0% by mass or less, more preferably 95.0% by mass or less, still more preferably 90.0% by mass or less.

### (Monofunctional (Meth)acrylate-based Polymerizable Compound)

The monofunctional (meth)acrylate-based polymerizable compound may be an alkyl (meth)acrylate-based compound, a hydroxy group-containing (meth)acrylate-based compound, a halogen-containing (meth)acrylate-based compound, an ether group-containing (meth)acrylate-based compound, a carboxy group-containing (meth)acrylate-based compound, other (meth)acrylate-based compounds, and the like.

In the present invention, the monofunctional (meth)acrylate-based polymerizable compound content is preferably 15.0% by mass or more, more preferably 20.0% by mass or more, still more preferably 25.0% by mass or more, based on the total photopolymerizable components. Also, the content is preferably 70.0% by mass or less, more preferably 65.0% by mass or less, still more preferably 60.0% by mass or less.

### - Alkyl (Meth)acrylate-based Compounds -

The alkyl (meth)acrylate-based compound is, for example, methyl (meth)acrylate, ethyl (meth)acrylate, propyl (meth)acrylate, isopropyl (meth)acrylate, n-butyl (meth)acrylate, i-butyl (meth)acrylate, t-butyl (meth)acrylate, amyl (meth)acrylate, isoamyl (meth)acrylate, hexyl (meth)acrylate, 2-ethylhexyl (meth)acrylate, octyl (meth)acrylate, decyl (meth)acrylate, dodecyl (meth)acrylate, isooctyl (meth)acrylate, lauryl (meth)acrylate, stearyl (meth)acrylate, isostearyl (meth)acrylate, isodecyl (meth)acrylate, isomyristyl (meth)acrylate, octadecyl (meth)acrylate, dicyclopentanyl (meth)acrylate, tridecyl (meth)acrylate, nonyl (meth)acrylate, hexadecyl (meth)acrylate, myristyl (meth)acrylate, isobornyl (meth)acrylate, cyclohexyl (meth)acrylate, norbornyl (meth)acrylate, dicyclopentenyl (meth)acrylate, dicyclopentenyloxyethyl (meth)acrylate, 1-adamantyl (meth)acrylate, 3,5,5-trimethylcyclohexyl (meth)acrylate, 4-t-butylcyclohexyl (meth)acrylate, and the like.

When a photocurable inkjet ink composition according to the present invention contains a monofunctional alkyl (meth)acrylate-based compound, it is preferably 10.0% by mass or more, more preferably 12.0% by mass or more, still more preferably 15.0% by mass or more, based on the total photopolymerizable components. Also, the content is preferably 85.0% by mass or less, more preferably 80.0% by mass or less, still more preferably 75.0% by mass or less.

### - Hydroxy Group-containing (Meth)acrylate-based Compounds -

The hydroxy group-containing (meth)acrylate-based compound is, for example, a (poly)alkylene-glycol-modified (meth)acrylate, such as hydroxymethyl (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-methoxypropyl (meth)acrylate, 2-hydroxy-3-butoxypropyl (meth)acrylate, diethylene glycol mono(meth)acrylate, triethylene glycol mono(meth)acrylate, poly(ethylene glycol)mono(meth)acrylate, dipropylene glycol mono(meth)acrylate, poly(propylene glycol) mono(meth)acrylate, 1,6-hexanediol mono(meth)acrylate, glycerin mono(meth)acrylate, 2-hydroxy-3-chloropropyl (meth)acrylate, 2-hydroxy-3-phenoxypropyl (meth)acrylate, 2-hydroxy-3-allyloxypropyl (meth)acrylate, 2-(meth)acryloyloxyethyl-2-hydroxypropyl phthalate, 2-ethylhexyl EO-modified (meth)acrylate, o-phenylphenol EO-modified (meth)acrylate, p-cumylphenol EO-modified (meth)acrylate, nonylphenol EO-modified (meth)acrylate, and the like. In the present invention, the hydroxy group-containing (meth)acrylate-based compound is preferably contained, and a hydroxyalkyl (meth)acrylate is more preferably contained.

The content of the hydroxy group-containing (meth)acrylate-based compound is preferably 20.0% by mass or more, more preferably 25.0% by mass or more, still more preferably 30.0% by mass or more, based on the total polymerizable components. Also, the content is preferably 65.0% by mass or less, more preferably 60.0% by mass or less, still more preferably 55.0% by mass or less.

### - (Meth)acrylate-based Compounds Containing Halogen -

The (meth)acrylate-based compound containing a halogen is, for example, trifluoromethyl (meth)acrylate, 2,2,2-trifluoroethyl (meth)acrylate, 2,2,3,3-tetrafluoropropyl (meth)acrylate, 1H-hexafluoroisopropyl (meth)acrylate, 1H,1H,5H-octafluoropentyl (meth)acrylate, 1H,1H,2H,2H-heptadecafluorodecyl (meth)acrylate, 2,6-dibromo-4-butylphenyl (meth)acrylate, 2,4,6-tribromophenoxyethyl (meth)acrylate, 2,4,6-tribromophenol 3EO (ethylene oxide)-added (meth)acrylate, and the like.

### - Ether Group-containing (Meth)acrylate-based Compounds-

The ether group-containing (meth)acrylate-based compound is, for example, an alkoxy-based and/or phenoxy-based (meth)acrylate, such as 1,3-butylene glycol methyl ether (meth)acrylate, methoxytriethylene glycol (meth)acrylate, methoxydipropylene glycol (meth)acrylate, methoxytripropylene glycol (meth)acrylate, methoxypolypropylene glycol (meth)acrylate, ethoxydiethylene glycol (meth)acrylate, ethylcarbitol (meth)acrylate, 2-ethylhexylcarbitol (meth)acrylate, tetrahydrofurfuryl (meth)acrylate, cresyl polyethylene glycol (meth)acrylate, 2-(vinyloxyethoxy)ethyl (meth)acrylate, phenoxyethyl (meth)acrylate, p-nonylphenoxyethyl (meth)acrylate, p-nonylphenoxy polyethylene glycol (meth)acrylate, glycidyl (meth)acrylate, phenoxydiethylene glycol (meth)acrylate, phenoxy-polyethylene glycol (meth)acrylate, hexaethylene glycol monophenyl ether mono(meth)acrylate, diethylene glycol monobutyl ether acrylate, dipropylene glycol monomethyl ether (meth)acrylate, 3-methoxybutyl (meth)acrylate, methoxydiethylene glycol (meth)acrylate, methoxypropylene glycol (meth)acrylate, methoxypolyethylene glycol (meth)acrylate (the number of EO repeating units: 400, 700, or the like), 2-(2-ethoxyethoxy)ethyl (meth)acrylate, 2-ethoxyethyl (meth)acrylate, 2-methoxyethyl (meth)acrylate, 3-methoxybutyl acrylate, ethoxyethyl (meth)acrylate, ethoxyethoxyethyl (meth)acrylate, butoxyethyl (meth)acrylate, alkoxylated 2-phenoxyethyl (meth)acrylate (ethoxylated 2-phenoxyethyl (meth)acrylate, propoxylated 2-phenoxyethyl (meth)acrylate, and the like), alkoxylated nonylphenyl (meth)acrylate (ethoxylated (4) nonylphenol (meth)acrylate and the like), 2-phenoxyethyl (meth)acrylate, p-cumylphenoxyethylene glycol (meth)acrylate, methylphenoxyethyl (meth)acrylate, ethoxylated succinic acid (meth)acrylate, ethoxylated tribromophenyl (meth)acrylate, ethoxylated nonylphenyl (meth)acrylate, and the like.

### - Carboxy Group-containing (Meth)acrylate-based Compounds -

The carboxy group-containing (meth)acrylate-based compound is, for example, β-carboxyethyl (meth)acrylate, succinic acid monoacryloyloxyethyl ester, ω-carboxy polycaprolactone mono(meth)acrylate, 2-(meth)acryloyloxyethyl hydrogen phthalate, 2-(meth)acryloyloxypropyl hydrogen phthalate, 2-(meth)acryloyloxypropyl hexahydrohydrogen phthalate, 2-(meth)acryloyloxypropyl tetrahydrohydrogen phthalate, and the like.

### - Other (Meth)acrylate-based Compounds -

Another (meth)acrylate-based compound is, for example, benzyl (meth)acrylate, N,N-dimethylaminoethyl (meth)acrylate, N,N-dimethylaminopropyl (meth)acrylate, morpholinoethyl (meth)acrylate, trimethylsiloxyethyl (meth)acrylate, diphenyl-2-(meth)acryloyloxyethyl phosphate, 2-(meth)acryloyloxyethyl acid phosphate, caprolactone-modified-2-(meth)acryloyloxyethyl acid phosphate, 2-hydroxy-1-(meth)acryloxy-3-methacryloxypropane, (meth)acryloyloxyethyl phthalate, 2-(meth)acryloyloxyethyl-2-hydroxyethyl phthalate, 2-(meth)acryloyloxypropyl phthalate, tricyclodecane monomethylol (meth)acrylate, a (meth)acrylic acid dimer, diethylaminoethyl (meth)acrylate, 2-(meth)acryloyloxyethyl succinic acid, 2-(meth)acryloyloxyethylhexahydrophthalic acid, 2-ethylhexyl-diglycol (meth)acrylate, aminoethyl (meth)acrylate, ethylcarbitol (meth)acrylate, ethyl diglycol (meth)acrylate, a dimethylaminoethyl (meth)acrylate benzyl chloride quaternary salt, tribromophenyl (meth)acrylate, 1,4-cyclohexanedimethanol mono(meth)acrylate, cresol (meth)acrylate, trimethylolpropane formal (meth)acrylate, neopentyl glycol (meth)acrylic acid benzoate, (2-methyl-2-ethyl-1,3-dioxolan-4-yl)methyl (meth)acrylate, **1-**(meth)acryloylpiperidin-2-one, 2-(meth)acrylic acid-1,4-dioxaspiro[4,5]dec-2-ylmethyl, N-(meth)acryloyloxyethyl hexahydrophthalimide, γ-butyrolactone (meth)acrylate, caprolactone-modified tetrahydrofurfuryl (meth)acrylate, imide (meth)acrylate, vinyl (meth)acrylate, maleimide, and the like.

### (Polyfunctional Polymerizable Compounds)

A polyfunctional polymerizable compound (a compound with two or more unsaturated bonds) is, for example, a polyfunctional (meth)acrylate compound, a vinyl ether group-containing (meth)acrylate-based compound, and the like.

### - Polyfunctional (Meth)acrylate-based Compounds -

The polyfunctional (meth)acrylate-based compound may be a bifunctional monomer, such as ethylene glycol di(meth)acrylate, a poly(ethylene glycol) di(meth)acrylate, such as diethylene glycol di(meth)acrylate, triethylene glycol di(meth)acrylate, tetraethylene glycol di(meth)acrylate, polyethylene glycol (400) di(meth)acrylate, or polyethylene glycol (600) diacrylate, propylene glycol di(meth)acrylate, a poly(propylene glycol) di(meth)acrylate, such as dipropylene glycol di(meth)acrylate or tripropylene glycol di(meth)acrylate, an alkylene glycol di(meth)acrylate, such as butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, tricyclodecane dimethylol di(meth)acrylate, tricyclodecane dimethylol dicaprolactonate di(meth)acrylate, cyclohexanedimethanol di(meth)acrylate, or dicyclopentanyl di(meth)acrylate, bisphenol A tetraethylene oxide adduct di(meth)acrylate, bisphenol F tetraethylene oxide adduct di(meth)acrylate, bisphenol S tetraethylene oxide adduct di(meth)acrylate, hydrogenated bisphenol A tetraethylene oxide adduct di(meth)acrylate, hydrogenated bisphenol F tetraethylene oxide adduct di(meth)acrylate, hydrogenated bisphenol A di(meth)acrylate, hydrogenated bisphenol F di(meth)acrylate, bisphenol A tetraethylene oxide adduct dicaprolactonate di(meth)acrylate, bisphenol F tetraethylene oxide adduct dicaprolactonate di(meth)acrylate, and the like, a di(meth)acrylate of a polyhydric alcohol, such as glycerin, pentaerythritol, diglycerin, ditrimethylolpropane, dipentaerythritol, and the like. Among these polyfunctional (meth)acrylate compounds, a poly(alkylene glycol) di(meth)acrylate is preferred, a dialkylene glycol di(meth)acrylate is more preferred, and dipropylene glycol di(meth)acrylate is still more preferred.

Examples thereof also include trifunctional monomers, such as glycerin tri(meth)acrylate, trimethylolpropane tri(meth)acrylate, trimethylolpropane tricaprolactonate tri(meth)acrylate, trimethylolethane tri(meth)acrylate, trimethylolhexane tri(meth)acrylate, trimethyloloctane tri(meth)acrylate, and pentaerythritol tri(meth)acrylate; and 3EO (ethylene oxide)-modified products, 6EO-modified products, and 9EO-modified products thereof (EO-modified trimethylolpropane tri(meth)acrylate, 3EO-modified trimethylolpropane tri(meth)acrylate, 3EO-modified trimethylolethane tri(meth)acrylate, and 3EO-modified trimethylolhexane tri(meth)acrylate); and tetrafunctional functional and higher functional monomers, such as trimethylolpropane tetra(meth)acrylate, pentaerythritol tetra(meth)acrylate, pentaerythritol tetracaprolactonate tetra(meth)acrylate, diglycerin tetra(meth)acrylate, ditrimethylolpropane tetra(meth)acrylate, ditrimethylolpropane tetracaprolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol octa(meth)acrylate, and a tripentaerythritol polyalkylene oxide hepta(meth)acrylate. Among these, trimethylolpropane triacrylate (TMPTA; trifunctional), ditrimethylolpropane tetraacrylate (DITMPTA; tetrafunctional), dipentaerythritol hexaacrylate (DPHA; hexafunctional), hexanediol diacrylate (HDDA; bifunctional), and the like can be used.

### - Vinyl Ether Group-containing (Meth)acrylate-based Compounds with Vinyl Ether Group -

The vinyl ether group-containing (meth)acrylate-based compound is, for example, 2-vinyloxyethyl (meth)acrylate, 3-vinyloxypropyl (meth)acrylate, 1-methyl-2-vinyloxyethyl (meth)acrylate, 2-vinyloxypropyl (meth)acrylate, 4-vinyloxybutyl (meth)acrylate, 1-methyl-3-vinyloxypropyl (meth)acrylate, 1-vinyloxymethylpropyl (meth)acrylate, 2-methyl-3-vinyloxypropyl (meth)acrylate, 3-methyl-3-vinyloxypropyl (meth)acrylate, 1,1-dimethyl-2-vinyloxyethyl (meth)acrylate, 3-vinyloxybutyl (meth)acrylate, 1-methyl-2-vinyloxypropyl (meth)acrylate, 2-vinyloxybutyl (meth)acrylate, 4-vinyloxycyclohexyl (meth)acrylate, 5-vinyloxypentyl (meth)acrylate, 6-vinyloxyhexyl (meth)acrylate, 4-vinyloxymethylcyclohexylmethyl (meth)acrylate, 3-vinyloxymethylcyclohexylmethyl (meth)acrylate, 2-vinyloxymethylcyclohexylmethyl (meth)acrylate, p-vinyloxymethylphenylmethyl (meth)acrylate, m-vinyloxymethylphenylmethyl (meth)acrylate, o-vinyloxymethylphenylmethyl (meth)acrylate, 2-(vinyloxyisopropoxy)ethyl (meth)acrylate, 2-(vinyloxyethoxy)propyl (meth)acrylate, 2-(vinyloxyethoxy)isopropyl (meth)acrylate, 2-(vinyloxyisopropoxy)propyl (meth)acrylate, 2-(vinyloxyisopropoxy)isopropyl (meth)acrylate, 2-(vinyloxyethoxyethoxy)ethyl (meth)acrylate, 2-(vinyloxyethoxyisopropoxy)ethyl (meth)acrylate, 2-(vinyloxyisopropoxyethoxy)ethyl (meth)acrylate, 2-(vinyloxyisopropoxyisopropoxy)ethyl (meth)acrylate, and the like.

Among these polyfunctional polymerizable compounds, (meth)acrylate-based compounds with an ether group and (poly)alkylene glycol di(meth)acrylates are preferred. Among the (meth)acrylate-based compounds with an ether group, one or more selected from EO-modified trimethylolpropane triacrylates and 3EO-modified trimethylolpropane triacrylates are preferred.

Among these, it is more preferable to contain an optionally PO-modified neopentyl glycol diacrylate, and/or EO-modified trimethylolpropane triacrylate, and/or 3EO-modified trimethylolpropane triacrylate, and dipropylene glycol diacrylate, and it is most preferable to contain an optionally PO-modified neopentyl glycol diacrylate and dipropylene glycol diacrylate.

It should be noted that EO modification refers to ethylene oxide modification, and PO modification refers to propylene oxide modification.

The content of polyfunctional (meth)acrylate-based compound that can be contained in a photocurable inkjet ink composition according to the present invention is preferably 15.0% by mass or more, more preferably 20.0% by mass or more, still more preferably 25.0% by mass or more, based on the total photopolymerizable components. Furthermore, it is preferably 55.0% by mass or less, more preferably 50.0% by mass or less, still more preferably 45.0% by mass or less.

When a photocurable inkjet ink composition according to the present invention contains dipropylene glycol diacrylate and an optionally PO-modified neopentyl glycol diacrylate, the mass ratio of dipropylene glycol diacrylate to the optionally PO-modified neopentyl glycol diacrylate preferably ranges from 1/10 to 10/1, more preferably 3/7 to 7/3, still more preferably 4/6 to 6/4.

### ((Meth)acrylic Acid Amide-based Compound)

A photocurable inkjet ink composition according to the present invention may or may not contain a (meth)acrylic acid amide-based compound. The (meth)acrylic acid amide-based compound is, for example, acryloylmorpholine, (meth)acrylamide, N-isopropyl (meth)acrylamide, N-(2-hydroxyethyl)(meth)acrylamide, and the like. Among these, acryloylmorpholine is preferred.

It should be noted that these (meth)acrylic acid amide-based compounds may correspond to compounds overlapping with the (meth)acrylate-based compounds and the like described above. Even if they overlap, they are considered to correspond to their respective compounds.

When the (meth)acrylic acid amide-based compound is contained, its content is preferably 2.0% by mass or more, more preferably 4.0% by mass or more, still more preferably 6.0% by mass or more, based on the total photopolymerizable components. Furthermore, the content is preferably 20.0% by mass or less, more preferably 18.0% by mass or less, still more preferably 15.0% by mass or less.

### <D. Amine-Modified Photopolymerizable Oligomer>

The amine-modified photopolymerizable oligomer has a weight-average molecular weight in the range of 500 to 3,000 and a viscosity of less than 4,000 cps. Furthermore, an amine-modified photopolymerizable oligomer containing an acrylated amine compound with two photopolymerizable functional groups and two amino groups in the molecule can be used.

The amine-modified photopolymerizable oligomer may be any acrylated amine compound with two photopolymerizable functional groups and two amino groups in the molecule. For example, the photopolymerizable functional groups in the acrylated amine compound may be a functional group that can undergo a polymerization reaction by visible light or invisible light including ionizing radiation, such as ultraviolet ray or an electron beam, to form intermolecular crosslinking bonds. Furthermore, the photopolymerizable functional group includes both a photopolymerizable functional group in a narrow sense that it is directly activated by light irradiation and undergoes a photopolymerization reaction, and a photopolymerizable functional group in a broad sense that it initiates and promotes a polymerization reaction by the action of an active species generated from a photopolymerization initiator when the photopolymerizable functional group and the photopolymerization initiator coexist and are irradiated with light.

The photopolymerizable functional group is a group having an ethylenic double bond or the like with photoradical polymerization reactivity, a group having a cyclic ether group, such as an epoxy group, or the like with photocationic polymerization and photoanionic polymerization reactivity, or the like. Among these, the photopolymerizable functional group is preferably a (meth)acryloyl group, a vinyl group, an allyl group, or the like with an ethylenic double bond, more preferably a (meth)acryloyl group. In the acrylated amine compound with two photopolymerizable functional groups and two amino groups in the molecule, both of the two photopolymerizable functional groups are (meth)acryloyl groups, or the amine value preferably ranges from 130 to 142 mgKOH/g. In the present embodiment, the amine value refers to an amine value per gram of solid components, is measured by a potentiometric titration method (for example, COMTITE (AUTO TITRATOR COM-900, BURET B-900, TITSTATIONK-900), manufactured by Hiranuma Sangyo Co., Ltd.) using 0.1 N aqueous hydrochloric acid, and is then converted into equivalents of potassium hydroxide.

The acrylated amine compound with two photopolymerizable functional groups and two amino groups in the molecule is preferably an acrylated amine compound produced by reacting a bifunctional (meth)acrylate with an amine compound. The bifunctional (meth)acrylate may be an alkylene glycol di(meth)acrylate, such as 1,4-butanediol di(meth)acrylate, 1,6-hexanediol di(meth)acrylate, 1,9-nonanediol di(meth)acrylate, propylene glycol di(meth)acrylate, 1,3-butylene glycol di(meth)acrylate, or neopentyl glycol di(meth)acrylate; a bisphenol alkylene oxide adduct di(meth)acrylate, such as a di(meth)acrylate of an ethylene oxide adduct of bisphenol A, a di(meth)acrylate of an ethylene oxide adduct of bisphenol F, a di(meth)acrylate of an ethylene oxide adduct of bisphenol S, a di(meth)acrylate of an ethylene oxide adduct of thiobisphenol, or a di(meth)acrylate of an ethylene oxide adduct of brominated bisphenol A; a polyalkylene glycol di(meth)acrylate, such as polyethylene glycol di(meth)acrylate, polypropylene glycol di(meth)acrylate; di(meth)acrylate of neopentyl glycol hydroxypivalate, and the like. Among these, the bifunctional (meth)acrylate is preferably 1,6-hexanediol di(meth)acrylate.

The amine compound is a monofunctional amine compound, such as benzylamine, phenethylamine, ethylamine, n-propylamine, isopropylamine, n-butylamine, isobutylamine, n-pentylamine, isopentylamine, n-hexylamine, cyclohexylamine, n-heptylamine, n-octylamine, 2-ethylhexylamine, n-nonylamine, n-decylamine, n-dodecylamine, n-tetradecylamine, n-hexadecylamine, or n-octadecylamine; a polyfunctional amine compound, such as diethylenetriamine, triethylenetetramine, tetraethylenepentamine, 1,6-hexamethylenediamine, 1,8-octamethylenediamine, 1,12-dodecamethylenediamine, o-phenylenediamine, p-phenylenediamine, m-phenylenediamine, o-xylylenediamine, p-xylylenediamine, m-xylylenediamine, menthane diamine, bis(4-amino-3-methylcyclohexylnomethane, isophorone diamine, 1,3-diaminocyclohexane, or spiroacetal-based diamine; and the like. Furthermore, the amine compound may be a high-molecular-weight polyfunctional amine compound, such as polyethyleneimine, polyvinylamine, or polyallylamine.

An oligomer of the acrylated amine compound with two photopolymerizable functional groups and two amino groups in the molecule may be CN371NS, CN549NS, CN550, CN551NS, CN371, CN373, CN383, CN386, CN501, CN503, or CN3755 (all by Sartomer Inc.), EBECRYL LEO 10101, EBECRYL LEO 10103, EBECRYL 80, EBECRYL 81, EBECRYL 83, and EBECRYL 7100, EBECRYL 84, or EBECRYL P115 (all by Daicel-Allnex Ltd.), ETERCURE 63922 (Eternal), LAROMER PO 83F, LAROMER PO 84F, Laromer LR8946, Laromer LR8956, Laromer LR8996, or Laromer LR8894 (all by BASF SE), AgiSyn 001, 002, 003, 008, 701, 701P, 703, or 703TF (all by DSM Corporation), Photomer 4771, 4775, 4967, 5096, 5662, or 5930 (all by Cognis), PHOTOCRYL A104, Miramer AS1000 (all by MIWON Specialty Chemical Co., Ltd.), Doublecure EPD, OPD, 115, 225, 645, PolyQ222, 226, 224, or 101 (all by Double Bond Chemicals Ind., Co., Ltd), and the like.

The amine-modified photopolymerizable oligomer preferably constitutes 3.0% by mass or more, more preferably 4.0% by mass or more, still more preferably 5.0% by mass or more, based on the total photopolymerizable components. Furthermore, it is preferably 26.0% by mass or less, more preferably 24.0% by mass or less, still more preferably 22.0% by mass or less.

An amine-modified photopolymerizable oligomer content of less than 3.0% by mass results in low LED curability and metal halide lamp curability.

### <E. Surface Conditioner (Surfactant)>

In a photocurable inkjet ink composition according to the present invention, depending on an inkjet head and a printing substrate to be used, any known surfactant used for a photocurable inkjet ink composition, for example, a nonionic surfactant, a cationic surfactant, an anionic surfactant, or a betaine surfactant, can be used as a surface conditioner without limitation. More specifically, the surfactant is, for example, a silicone-based surfactant, such as a polyether-modified silicone oil, a polyester-modified polydimethylsiloxane, or a polyester-modified methyl alkyl polysiloxane, a fluorinated-based surfactant, an acetylene-based surfactant, and the like. The surfactants may be used alone or in combination.

The silicone-based surfactant may be BYK-307, BYK-315N, BYK-331, BYK-333, BYK-347, BYK-348, BYK-349, BYK-345, BYK-377, BYK-378, BYK-3455 (all by BYK-Chemie GmbH), and the like.

The fluorinated-based surfactant may be F-410, F-444, or F-553 (all by DIC Corporation), FS-65, FS-34, FS-35, FS-31, FS-30 (all by Du Pont de Nemours, Inc.), and the like.

The acetylene-based surfactant may be Dynol 607, Dynol 609, Olfin E1004, Olfin E1010, Olfin E1020, Olfin PD-001, Olfin PD-002W, Olfin PD-004, Olfin PD-005, Olfin EXP.4001, Olfin EXP.4200, Olfin EXP.4123, or Olfin EXP.4300 (all by Nissin Chemical Co., Ltd.), Surfynol 104E, Surfynol 104H, Surfynol 104A, Surfynol 104BC, Surfynol 104DPM, Surfynol 104PA, Surfynol 104PG-50, Surfynol 420, Surfynol 440, Surfynol 465 (all by Evonik Industries AG.), and the like.

In a photocurable inkjet ink composition according to the present invention, the proportion of the surfactant is preferably 0.005% by mass or more, more preferably 0.01% by mass or more, from the perspective of lowering the surface tension of the ink composition and enhancing the discharge stability from an inkjet head, and is preferably 1.5% by mass or less, more preferably 1.0% by mass or less, from the perspective of reducing bubbles in the ink composition generated during blending and enhancing the discharge stability.

When a surface conditioner is contained, the surface conditioner content is not particularly limited, but is preferably a content such that the photocurable inkjet ink composition has a surface tension of 32.0 mN/m or less. A surface tension of more than 32.0 mN/m results in image degradation due to insufficient wettability to a base material.

### [Other Polymerizable Compounds]

### - Unsaturated Carboxylic Acid Compounds -

An unsaturated carboxylic acid compound is, for example, an unsaturated carboxylic acid, such as (meth)acrylic acid, itaconic acid, crotonic acid, isocrotonic acid, fumaric acid, maleic acid, a salt thereof, an acid anhydride thereof, and the like.

### (Vinyl Compounds)

A photocurable inkjet ink composition according to the present invention may blend a vinyl compound in addition to the photopolymerizable component described above. Such a vinyl compound may be a vinyl compound without a structure derived from (meth)acrylic acid, such as N-vinylpyrrolidone, N-vinylformamide, N-vinylacetamide, N-vinyl-2-caprolactam, N-vinylcarbazole, vinylmethyloxazolidinone, and the like.

When a vinyl compound is contained, the vinyl compound content is preferably 1.0% by mass or more, more preferably 3.0% by mass or more, still more preferably 5.0% by mass or more, based on the total photopolymerizable components. The content is preferably 10.0% by mass or less, more preferably 8.0% by mass or less, still more preferably 6.0% by mass or less.

### - Styrene-based Compounds -

A styrene-based compound is, for example, styrene, vinyltoluene, p-hydroxystyrene, p-chlorostyrene, p-bromostyrene, p-methylstyrene, p-methoxystyrene, p-t-butoxystyrene, p-t-butoxycarbonylstyrene, p-t-butoxycarbonyloxystyrene, 2,4-diphenyl-4-methyl-1-pentene, divinylbenzene, and the like.

### - Arylate-based Compounds -

An arylate-based compound is, for example, allyl glycidyl ether, diallyl phthalate, triallyl trimellitate, isocyanuric acid triallylate, and the like.

### - Other Compounds with One Ethylenically Unsaturated Bond -

"Another compound with one ethylenically unsaturated bond" other than the compounds described above can be used as a compound with one ethylenically unsaturated bond.

Such a compound is, for example, vinyl acetate, vinyl monochloroacetate, vinyl benzoate, vinyl pivalate, vinyl butyrate, vinyl laurate, divinyl adipate, vinyl crotonate, vinyl 2-ethylhexanoate, a 3-membered ring compound (for example, vinylcyclopropane, 1-phenyl-2-vinylcyclopropane, 2-phenyl-3-vinyloxirane, or 2,3-divinyloxirane), a cyclic ketene acetal (for example, 2-methylene-1,3-dioxepane, podioxolane, 2-methylene-4-phenyl-1,3-dioxepane, 4,7-dimethyl-2-methylene-1,3-dioxepane, 5,6-benzo-2-methylene-1,3-diosepane, and the like), and the like.

### (Other Oligomers)

An oligomer other than the amine-modified photopolymerizable oligomer that can also be used is a polyurethane oligomer and/or a polyurethane polyurea oligomer using, as a raw material, a polyester polyol produced by using a plant-derived dicarboxylic acid component or diol component, from an environmental standpoint.

Any vegetable-oil-modified polyester acrylate oligomer with 2 to 6 acrylate groups in the molecule can be used without limitation as a vegetable-oil-modified polyfunctional polyester acrylate oligomer.

In particular, for example, one or more selected from the group consisting of EBECRYL 450, 452, 820, and 1622 and a tall-oil-fatty-acid-modified hexafunctional polyester acrylate (for example, AgiSyn 716 and the like) are preferably used to increase the biomass content of a photocurable inkjet ink composition.

These oligomers may be used alone or in combination.

### (Polymers)

A polymer as a curable resin with an ethylenically unsaturated bond is a component that increases the molecular weight together with the above monomer or oligomer, has a large molecular weight before being irradiated with an active energy ray, such as an ultraviolet ray, and is therefore a component useful for improving the viscoelasticity of an ink composition.

Such a polymer is used, for example, in a state of being dissolved or dispersed in a monomer that is a liquid with a low viscosity. The polymer with an ethylenically unsaturated bond may be polydiallyl phthalate, an acrylic resin with an unreacted unsaturated group, an acrylic-modified phenolic resin, and the like. Among these, polydiallyl phthalate can be preferably used due to its particularly high compatibility with the above monomer or oligomer.

Although a polymer with an ethylenically unsaturated bond may not be contained, when it is contained, the content of the polymer with an ethylenically unsaturated bond preferably ranges from 0 to 50.0% by mass, more preferably 0 to 30.0% by mass, still more preferably 0 to 20.0% by mass, based on the total photopolymerizable components.

### [Pigments]

A photocurable inkjet ink composition according to the present invention contains a pigment. The pigment is a component added to impart tinting strength, hiding power, and the like to the ink composition and is, for example, a color pigment, a white pigment, a metal powder, and the like. Such a pigment is, for example, but is not limited to, the following organic and/or inorganic pigment conventionally used in ink compositions.

The pigment preferably has an average particle size of 500 nm or less, more preferably 400 nm or less, still more preferably 350 nm or less. A pigment with an average particle size of 500 nm or less can provide a photocurable inkjet ink composition with higher curability.

The pigment may be a dye lake pigment, an azo-based pigment, a benzimidazolone-based pigment, a phthalocyanine-based pigment, a quinacridone-based pigment, an anthraquinone-based pigment, a dioxazine-based pigment, an indigo-based pigment, a thioindiko-based pigment, a perylene-based pigment, a perinone-based pigment, a diketopyrrolopyrrole-based pigment, an isoindolinone-based pigment, a nitro-based pigment, a nitroso-based pigment, a flavanthrone-based pigment, a quinophthalone-based pigment, a pyranthrone-based pigment, an indanthrone-based pigment, an inorganic pigment, and the like.

Among these pigments, examples include a yellow pigment, such as a disazo yellow (Pigment Yellow 12, Pigment Yellow 13, Pigment Yellow 14, Pigment Yellow 17, or Pigment Yellow 1), or Hansa yellow; a magenta pigment, such as brilliant carmine 6B, lake red C, watching red, or quinacridone; a cyan pigment, such as phthalocyanine blue, phthalocyanine green, or alkali blue; a color pigment (including an achromatic color pigment, such as white or black), such as titanium oxide, red oxide, antimony red, cadmium yellow, cobalt blue, Prussian blue, ultramarine blue, iron black, chromium oxide green, carbon black, or graphite; and a metal powder, such as aluminum paste or a bronze powder.

The pigment content is, for example, but is not limited to, approximately 1 to 20% by mass based on the entire ink composition depending on the intended degree of coloring. It should be noted that to prepare a colored ink composition, a pigment or dye of another color can be used in combination as a complementary color, or an ink composition of another color can be added.

A pigment in a photocurable inkjet ink composition preferably has an average particle size (D50) of 50 nm or more, more preferably 100 nm or more, from the perspective of tinting strength. Also, from the perspective of dispersion stability, the average particle size is preferably 500 nm or less, more preferably 350 nm or less.

### (Pigment Dispersant and Pigment Dispersing Resin)

When containing a pigment as a colorant, a photocurable inkjet ink composition according to the present invention may blend a pigment dispersant and/or a pigment dispersing resin different from E. Surface Conditioner.

The pigment dispersant may be one or more selected from the group consisting of known nonionic surfactants, anionic surfactants, cationic surfactants, and amphoteric surfactants.

The surfactant can be, for example, one or more selected from the group consisting of a silicon-based surfactant (for example, a polyether-modified silicon oil, a polyester-modified polydimethylsiloxane, a polyester-modified methylalkylpolysiloxane, and the like), a fluorinated-based surfactant, an oxyalkylene ether-based surfactant, an acetylenic glycol-based surfactant, a phosphorus-based surfactant, and a sulfonic acid-based surfactant.

Also, the pigment dispersing resin can be one or more selected from the group consisting of a polymeric dispersant (for example, a carbodiimide-based, polyester-based, polyamine-based, polyester amine-based, polyurethane-based, fatty acid amine-based, polyacrylate-based, polycaprolactone-based, polysiloxane-based, multichain polymeric nonionic-based, polymeric ionic-based dispersant, and the like), and the like.

When a photocurable inkjet ink composition according to the present invention contains a pigment dispersant or a pigment dispersing resin, the pigment dispersant or pigment dispersing resin content preferably ranges from 1 to 200 parts by mass per 100 parts by mass of the total content of pigments used.

### (Other Components)

A photocurable inkjet ink composition according to the present invention may contain, as other components, various additive agents, such as a surfactant, a polymerization inhibitor, a storability improving agent, an UV absorbent, an antioxidant, an defoaming agent, an antifungal agent, a rustproofing agent, a thickening agent, a humectant, and a pH-adjusting agent. A non-curable resin may or may not be blended. Furthermore, a solvent may or may not be contained.

### (Solvent)

A photocurable inkjet ink composition according to the present invention can blend a solvent as required. The solvent may be an ester-based organic solvent, an ether-based organic solvent, an ether ester-based organic solvent, a ketone-based organic solvent, an aromatic hydrocarbon-based solvent, a nitrogen-containing-based organic solvent, and the like. Also, the solvent may have a boiling point in the range of 150 to 220°C at 1 atm. The solvent is preferably not used as much as possible from the perspective of curability of an ink composition, environmental issues, and the like, and the proportion of the solvent in the ink composition is preferably 5% by mass or less, more preferably 2% by mass or less.

To prevent polymerization during storage of a photocurable inkjet ink composition, a known polymerization inhibitor may be contained. The polymerization inhibitor is preferably, for example, a phenolic compound, such as butylhydroxytoluene, tocopherol acetate, nitrosamine, benzotriazole, a hindered amine, and the like, more preferably butylhydroxytoluene. The addition of such a polymerization inhibitor can reduce increase in viscosity of an ink composition due to the progress of a polymerization reaction during storage. The polymerization inhibitor content of an ink composition ranges from, for example, approximately 0.1 to 1.0 parts by mass per 100 parts by mass of the total photopolymerizable components.

### (UV absorbent)

The UV absorbent may be a benzophenone-based UV absorbent, a benzotriazole-based UV absorbent, a salicylate-based UV absorbent, a hydroxy phenyl triazine-based UV absorbent, a cyanoacrylate-based UV absorbent, a nickel complex salt-based UV absorbent, and the like.

### (Antioxidant)

The antioxidant may be a phenolic-based antioxidant, an amine-based antioxidant, a sulfur-based antioxidant, a phosphorus-based antioxidant, and the like.

### (Defoaming Agent)

The defoaming agent may be a silicone-based defoaming agent, a Pluronic (registered trademark)-based defoaming agent, and the like.

A photocurable inkjet ink composition according to the present invention preferably has a viscosity of 6.0 cps or more, more preferably 8.0 cps or more, still more preferably 10.0 cps or more, and preferably 90.0 cps or less, more preferably 80.0 cps or less, still more preferably 75.0 cps or less, at 25°C. The ink composition blends a viscosity-adjusting agent or the like as required. It should be noted that the viscosity in the present description is measured with an E-type viscometer (RE100L type viscometer, manufactured by Toki Sangyo Co., Ltd.) at 25°C and 10 rpm.

The surface tension is preferably less than 32.0 mN/m.

### <Method for Preparing Photocurable Inkjet Ink Composition>

Next, a method for producing a photocurable inkjet ink composition according to the present invention using these materials is described.

A photocurable inkjet ink composition according to the present invention can be produced, for example, by dispersing and mixing components using a dispersion machine, such as a wet circulation mill, a bead mill, a ball mill, a sand mill, an attritor, a rolling mill, a DCP mill, an agitator, a Henschel mixer, a colloid mill, an ultrasonic homogenizer, a high-pressure homogenizer (Microfluidizer, Nanomizer, Ultimizer, Genus PY, DeBEE 2000, or the like), or a pearl mill, and, if necessary, adjusting the viscosity of the photocurable inkjet ink composition. It should be noted that the photocurable inkjet ink composition may be prepared by mixing a pigment, the pigment dispersant, and the photopolymerizable monomer to prepare a base ink composition in advance and adding thereto a residual content of the components to produce a desired composition.

### <Printing Method>

A printing method using a photocurable inkjet ink composition according to the present invention is described below.

Any inkjet printing apparatus may be used, a photocurable inkjet ink composition may be supplied to a printer head of a printer apparatus for an inkjet recording system, the ink composition is discharged from the printer head onto a base material to be printed, and the ink composition landed on the base material is then exposed to an active energy ray to be cured. The active energy ray may be ultraviolet ray, an electron beam, visible light, or the like emitted from a light-emitting diode (LED), various lamps, or an electrode. In particular, curability is good with ultraviolet ray from a light-emitting diode (LED) serving as a light source.

Also, the base material may be any base material to which a known photocurable inkjet ink composition can be applied, and for example, plastic, paper, capsule, gel, metal foil, glass, wood, cloth, and the like can be listed. Also, the base material of plastic is, for example, one or more selected from the group consisting of a polyester-based polymer (for example, polyethylene terephthalate (PET), poly(ethylene naphthalate), and the like), a cellulose-based polymer (for example, cellulose diacetate, cellulose triacetate (TAC), and the like), a polycarbonate-based polymer, a polyacrylic-based polymer (for example, polymethyl methacrylate and the like), a vinyl chloride-based polymer, a polyolefin-based polymer (for example, polyethylene, polypropylene, a polyolefin polymer with a cyclic norbornene structure, an ethylene-propylene copolymer, and the like), a polyamide-based polymer (for example, nylon, an aromatic polyamide polymer, and the like), a polystyrene-based polymer (for example, a polystyrene, an acrylonitrile-styrene copolymer, and the like), a polyimide-based polymer, a polysulfone-based polymer, a polyether sulfone-based polymer, a polyether ketone-based polymer, a polyphenylsulfide-based polymer, a polyvinyl alcohol-based polymer, a polyvinylidene chloride-based polymer, a polyvinyl butyral-based polymer, a polyarylate-based polymer, a polyoxymethylene-based polymer, a polyepoxy-based polymer, a blend of these polymers, and the like.

A method for printing and curing an ink composition according to the present invention is, more specifically, a method of discharging the ink composition according to the present invention onto a base material using an inkjet head and then exposing a coating film of the ink composition according to the present invention landed on the base material to light to be cured.

For example, the discharging (printing of an image) onto a base material can be performed by supplying an ink composition according to the present invention to a low-viscosity compatible printer head of an inkjet recording printer and discharging the ink composition from the printer head such that a coating film on the base material has a film thickness of, for example, 1 to 60 µm. Also, exposure to light and curing (curing of an image) can be performed by irradiating a coating film of an ink composition according to the present invention applied as an image to a base material with light.

A printer apparatus for an inkjet recording system for printing an ink composition according to the present invention can be a conventionally used printer apparatus for an inkjet recording system. It should be noted that when a continuous-type printer apparatus for an inkjet recording system is used, a conductivity-adding agent is further added to an ink composition according to the present invention to adjust the conductivity level.

The light source for curing the coating film may be ultraviolet ray (a UV lamp), ultraviolet ray (a metal halide lamp), ultraviolet ray (a light-emitting diode (LED)), an electron beam, visible light, and the like. The ultraviolet ray emitted from a light-emitting diode (LED) as a light source refers to "light emitted from a light-emitting diode that generates ultraviolet ray with an emission peak wavelength in the range of 360 to 420 nm".

### Examples

Although the present invention is described in more detail in the following examples, the present invention is not limited to these examples. It should be noted that unless otherwise specified, "%" refers to "% by mass", and "part(s)" refers to "part(s) by mass". Furthermore, the content of each material in tables is expressed in "part(s) by mass".

Photocurable inkjet ink compositions of examples and comparative examples in Tables 2 to 5 were prepared, and the test results for each photocurable inkjet ink composition are shown in Tables 2 to 5.

### (Photocurable Inkjet Ink Composition)

Components used in Tables 2 to 5 are as follows:
P.Y. 150: Pigment Yellow 150
P.R. 122: Pigment Red 122
P.R. 254: Pigment Red 254
P.B. 15:4: Pigment Blue 15:4
P.Bk. 7: carbon black
S56000: polymeric dispersant (Solsperse 56000, manufactured by Lubrizol Japan Ltd.)
CN371NS: amine-modified (meth)acrylate oligomer (acrylated amine compound with two photopolymerizable functional groups and two amino groups in molecule, Sartomer-Arkema Inc.)
DPGDA: dipropylene glycol diacrylate
(PO)NPGDA: PO (propoxylene)-modified neopentyl glycol diacrylate A1 to 12: polymeric photopolymerization initiator with ethylenically unsaturated bond shown in Table 1
TPO: 2,4,6-trimethylbenzoyl-diphenylphosphine oxide (number-averaged molecular weight: 348) (acylphosphine oxide-based photopolymerization initiator)
TX: (2-carboxymethoxythioxanthone)-(polytetramethylene glycol 250) diester (number-averaged molecular weight: 660) ((Omnipol TX) IGM Resins B.V.)
DETX: 2,4-diethylthioxanthone (manufactured by IGM RESINS B.V.)
UV22: quinone-based polymerization inhibitor (BASF SE)
BYK-377: silicone-based surfactant (solid content: 100%) (BYK-Chemie GmbH)

### (Preparation of Photocurable Inkjet Ink Composition)

The components were blended to have blending compositions (% by mass) shown in Tables 2 to 5 and were mixed by stirring to prepare photocurable inkjet ink compositions of examples and comparative examples.

### <Evaluation Method>

### (Viscosity)

The viscosity (cps) of the photocurable inkjet ink compositions obtained in the examples and comparative examples was measured with an E-type viscometer (trade name: RE100L type viscometer, manufactured by Toki Sangyo Co., Ltd.) at a temperature of 25°C and a rotor rotational speed of 10 rpm.

### (Surface Tension)

The surface tension (mN/m) of each photocurable inkjet ink composition was measured with a dynamic wettability tester (trade name: WET-6000, manufactured by RHESCA Co., Ltd.) at a temperature of 25°C.

### (LED Curability)

The photocurable inkjet ink composition obtained in each of the examples and comparative examples was applied to the surface of a polyethylene terephthalate film (E5100 manufactured by Toyobo Co., Ltd.) using a bar coater No. 6 to prepare a coated product. Using an LED lamp manufactured by Phoseon Technology, the coated product was then irradiated with an LED with a wavelength of 395 nm at an integrated amount of light of 80 mJ/cm² and was rated according to the following evaluation criteria.
○: An ink coating film was not removed even when rubbed with a cotton swab
X: An ink coating film was removed when rubbed with a cotton swab

### (Metal Halide Lamp Curability)

The photocurable inkjet ink composition obtained in each of the examples and comparative examples was applied to the surface of a polyethylene terephthalate film (E5100 manufactured by Toyobo Co., Ltd.) using a bar coater No. 6 to prepare a coated product. Next, using a conveyor-type light irradiator (STM-250E-16 manufactured by Heraeus, lamp: Z-8 lamp (metal halide type)), the coated product was then irradiated under the conditions of 120 W x 50 m/min and an integrated amount of UV light of 75 mJ/cm² [the integrated amount of UV light was determined by measuring the amount of radiation in the measurement range of 250 to 260 nm, 280 to 320 nm, 320 to 390 nm, and 395 to 445 nm using UVIMAP (UM 365H-S) manufactured by EIT as a measuring instrument] and was rated according to the following evaluation criteria.
○: An ink coating film was not removed even when rubbed with a cotton swab
X: An ink coating film was removed when rubbed with a cotton swab

### (Initiator-Induced Migration Test)

The photocurable inkjet ink composition obtained in each of the examples and comparative examples was printed on the surface of a biaxially oriented polypropylene film (P2161 manufactured by Toyobo Co., Ltd.) using a single-pass printer at a printing speed of 48 m/min and was then cured by LED radiation at a radiation energy of 500 mJ to prepare a coated product. The coated product was cut into 13 mm x 13 mm to prepare a test specimen.

200 mL of 50% aqueous ethanol was poured into a migration evaluation cell, which was allowed to stand at 40°C for 10 days in a state where the 50% aqueous ethanol was in contact with the back side of the printed surface of the test specimen. The aqueous ethanol was recovered after 10 days, and 0.2 mg of an internal standard liquid (terphenyl) was added to the recovered 200-mL aqueous ethanol. The aqueous ethanol after the addition of the internal standard liquid was passed through a solid-phase extraction cartridge, and a retained component was then extracted with 1 mL of methanol. Thus, in the methanol solution, a component eluted from the test specimen into the aqueous ethanol was concentrated 200 times.

The peak area of the internal standard liquid (1000 ppb) and the peak area of a migration component in the methanol solution were compared by GC/MS analysis. From the results of GC/MS, the concentration of the migration component of a component derived from the photopolymerization initiator in the filtrate was calculated and rated according to the following evaluation criteria.
○: 10 ppb or less
△: more than 10 ppb and 1 ppm or less
X: more than 1 ppm

**[Table 2]**

| | | Examples | | | | | | |
|---|---|---|---|---|---|---|---|---|
| | | 1 | 2 | 3 | 4 | 5 | 6 | 7 |
| Pigment | P.Y.150 | | | | | | | |
| | P.R.122 | | | | | | | |
| | P.R.254 | | | | | | | |
| | P.B.15:4 | 2.60% | 2.60% | 2.60% | 2.60% | 2.60% | 2.60% | 2.60% |
| | P.Bk.7 | | | | | | | |
| Dispersant | S56000 | 1.04% | 1.04% | 1.04% | 1.04% | 1.04% | 1.04% | 1.04% |
| Amine-modified oligomer of component D | CN371NS | 10.00% | 10.00% | 10.00% | 10.00% | 10.00% | 10.00% | 10.00% |
| Photopolymerizable compound of component C | 4-hydroxybutyl acrylate | 46.50% | 46.50% | 46.50% | 46.50% | 46.50% | 46.50% | 46.50% |
| | DPGDA | 15.00% | 15.00% | 15.00% | 15.00% | 15.00% | 15.00% | 15.00% |
| | (PO)NPGDA | 15.00% | 15.00% | 15.00% | 15.00% | 15.00% | 15.00% | 15.00% |
| Initiator of component A | A-1 | 8.00% | | | | | | |
| | A-2 | | 8.00% | | | | | |
| | A-3 | | | 8.00% | | | | |
| | A-4 | | | | 8.00% | | | |
| | A-5 | | | | | 8.00% | | |
| | A-6 | | | | | | 8.00% | |
| | A-7 | | | | | | | 8.00% |
| | A-8 | | | | | | | |
| | A-9 | | | | | | | |
| | A-10 | | | | | | | |
| | A-11 | | | | | | | |
| | A-12 | | | | | | | |
| Another initiator | TPO | | | | | | | |
| Sensitizer | TX | 1.00% | 1.00% | 1.00% | 1.00% | 1.00% | 1.00% | 1.00% |
| | DETX | | | | | | | |
| Polymerization inhibitor | UV22 | 0.40% | 0.40% | 0.40% | 0.40% | 0.40% | 0.40% | 0.40% |
| Surface conditioner | BYK-377 | 0.50% | 0.50% | 0.50% | 0.50% | 0.50% | 0.50% | 0.50% |
| Evaluation results | Total | 100.0% | 100.0% | 100.0% | 100.0% | 100.0% | 100.0% | 100.0% |
| | Viscosity (cps(25°C)) | 12.2 | 21.6 | 25.5 | 44.8 | 23.2 | 55.8 | 72.1 |
| | Surface tension (mN/m(25°C)) | 22.0 | 22.0 | 22.0 | 22.0 | 22.0 | 22.0 | 22.0 |
| | Average particle size (D50)nm | 150 | 150 | 140 | 150 | 160 | 150 | 140 |
| | LED curability | ○ | ○ | ○ | ○ | ○ | ○ | ○ |
| | Metal halide lamp curability | ○ | ○ | ○ | ○ | ○ | ○ | ○ |
| | Migration resulting from initiator | ○ | ○ | ○ | ○ | ○ | ○ | ○ |
| | Total mass of components A and D (%) | 18.00% | 18.00% | 18.00% | 18.00% | 18.00% | 18.00% | 18.00% |
| | A/D mass ratio | 0.80 | 0.80 | 0.80 | 0.80 | 0.80 | 0.80 | 0.80 |

**[Table 3]**

| | | Examples | | | | | | |
|---|---|---|---|---|---|---|---|---|
| | | 8 | 9 | 10 | 11 | 12 | 13 | 14 |
| Pigment | P.Y.150 | | | | | | | |
| | P.R.122 | | | | | | | |
| | P.R.254 | | | | | | | |
| | P.B.15:4 | 2.60% | 2.60% | 2.60% | 2.60% | 2.60% | 2.60% | 2.60% |
| | P.Bk.7 | | | | | | | |
| Dispersant | S56000 | 1.04% | 1.04% | 1.04% | 1.04% | 1.04% | 1.04% | 1.04% |
| Amine-modified oligomer of component D | CN371NS | 10.00% | 10.00% | 10.00% | 10.00% | 10.00% | 5.00% | 5.00% |
| Photopolymerizable compound of component C | 4-hydroxybutyl acrylate | 46.50% | 46.50% | 46.50% | 46.50% | 46.50% | 44.50% | 49.50% |
| | DPGDA | 15.00% | 15.00% | 15.00% | 15.00% | 15.00% | 10.00% | 15.00% |
| | (PO)NPGDA | 15.00% | 15.00% | 15.00% | 15.00% | 15.00% | 15.00% | 15.00% |
| Initiator of component A | A-1 | | | | | | | |
| | A-2 | | | | | | | |
| | A-3 | | | | | | | |
| | A-4 | | | | | | | |
| | A-5 | | | | | | | |
| | A-6 | | | | | | | |
| | A-7 | | | | | | | |
| | A-8 | 8.00% | | | | | | |
| | A-9 | | 8.00% | | | | | |
| | A-10 | | | 8.00% | | | | |
| | A-11 | | | | 8.00% | | | |
| | A-12 | | | | | 8.00% | 20.00% | 8.00% |
| Another initiator | TPO | | | | | | | |
| Sensitizer | TX | 1.00% | 1.00% | 1.00% | 1.00% | 1.00% | 1.00% | 3.00% |
| | DETX | | | | | | | |
| Polymerization inhibitor | UV22 | 0.40% | 0.40% | 0.40% | 0.40% | 0.40% | 0.40% | 0.40% |
| Surface conditioner | BYK-377 | 0.50% | 0.50% | 0.50% | 0.50% | 0.50% | 0.50% | 0.50% |
| Evaluation results | Total | 100.0% | 100.0% | 100.0% | 100.0% | 100.0% | 100.0% | 100.0% |
| | Viscosity (cps(25°C)) | 26.7 | 19.2 | 18.6 | 20.7 | 24.5 | 55.2 | 15.5 |
| | Surface tension (mN/m(25°C)) | 22.0 | 22.0 | 22.0 | 22.0 | 22.0 | 22.0 | 22.1 |
| | Average particle size (D50)nm | 150 | 160 | 170 | 140 | 140 | 140 | 150 |
| | LED curability | ○ | ○ | ○ | ○ | ○ | ○ | ○ |
| | Metal halide lamp curability | ○ | ○ | ○ | ○ | ○ | ○ | ○ |
| | Migration resulting from initiator | ○ | ○ | ○ | ○ | ○ | ○ | ○ |
| | Total mass of components A and D (%) | 18.00% | 18.00% | 18.00% | 18.00% | 18.00% | 25.00% | 13.00% |
| | A/D mass ratio | 0.80 | 0.80 | 0.80 | 0.80 | 0.80 | 4.00 | 1.60 |

**[Table 4]**

| | | Examples | | | | |
|---|---|---|---|---|---|---|
| | | 15 | 16 | 17 | 18 | 19 |
| Pigment | P.Y.150 | | | 2.28% | | |
| | P.R.122 | | | | 1.60% | |
| | P.R.254 | | | | 1.92% | |
| | P.B.15:4 | 2.60% | | | | |
| | P.Bk.7 | | | | | 1.60% |
| Dispersant | S56000 | 1.04% | | 0.92% | 1.66% | 0.64% |
| Amine-modified oligomer of component D | CN371NS | 20.00% | 10.00% | 8.00% | 5.00% | 10.00% |
| | 4-hydroxybutyl acrylate | 41.50% | 44.90% | 48.90% | 44.90% | 47.90% |
| | DPGDA | 10.00% | 18.00% | 15.00% | 15.00% | 15.00% |

| Photopolymerizable compound of component C | (PO)NPGDA | 15.00% | 18.00% | 15.00% | 15.00% | 15.00% |
|---|---|---|---|---|---|---|
| Initiator of component A | A-1 | | | | | |
| | A-2 | | | | | |
| | A-3 | | | | | |
| | A-4 | | | | | |
| | A-5 | | | | | |
| | A-6 | | | | | |
| | A-7 | | | | | |
| | A-8 | | | | | |
| | A-9 | | | | | |
| | A-10 | | | | | |
| | A-11 | | | | | |
| | A-12 | 8.00% | 8.00% | 8.00% | 8.00% | 8.00% |
| Another initiator | TPO | | | | | |
| Sensitizer | TX | 1.00% | 0.20% | 1.00% | 1.00% | 1.00% |
| | DETX | | | | | |
| Polymerization inhibitor | UV22 | 0.40% | 0.40% | 0.40% | 0.40% | 0.40% |
| Surface conditioner | BYK-377 | 0.50% | 0.50% | 0.50% | 0.50% | 0.50% |
| Evaluation results | Total | 100.0% | 100.0% | 100.0% | 100.0% | 100.0% |
| | Viscosity (cps(25°C)) | 30.4 | 31.2 | 22.3 | 20.1 | 20.5 |
| | Surface tension (mN/m(25°C)) | 22.2 | 22.0 | 22.1 | 22.1 | 22.0 |
| | Average particle size (D50)nm | 150 | - | 180 | 190 | 120 |
| | LED curability | ○ | ○ | ○ | ○ | ○ |
| | Metal halide lamp curability | ○ | ○ | ○ | ○ | ○ |
| | Migration resulting from initiator | ○ | ○ | ○ | ○ | ○ |
| | Total mass of components A and D (%) | 28.00% | 18.00% | 16.00% | 13.00% | 18.00% |
| | A/D mass ratio | 0.40 | 0.80 | 1.00 | 1.60 | 0.80 |

**[Table 5]**

| | | Comparative examples | | | | | | | | |
|---|---|---|---|---|---|---|---|---|---|---|
| | | 1 | 2 | 3 | 4 | 5 | 6 | 7 | 8 | 9 |
| Pigment | P.Y.150 | | | | | | | | | |
| | P.R.122 | | | | | | | | | |
| | P.R.254 | | | | | | | | | |
| | P.B.15:4 | 2.60% | 2.60% | 2.60% | 2.60% | 2.60% | 2.60% | 2.60% | 2.60% | 2.60% |
| | P.Bk.7 | | | | | | | | | |
| Dispersant | S56000 | 1.04% | 1.04% | 1.04% | 1.04% | 1.04% | 1.04% | 1.04% | 1.04% | 1.04% |
| Amine-modified oligomer of component D | CN371NS | 5.00% | 10.00% | 10.00% | | 10.00% | 30.00% | 2.00% | 25.00% | 2.00% |
| Photopolymerizable compound of component C | 4-hydroxybutyl acrylate | 48.50% | 50.50% | 46.50% | 56.50% | 47.00% | 14.50% | 50.50% | 37.50% | 42.50% |
| | DPGDA | 15.00% | 15.00% | 15.00% | 15.00% | 15.00% | 10.00% | 20.00% | 15.00% | 15.00% |
| | (PO)NPGDA | 15.00% | 15.00% | 15.00% | 15.00% | 15.00% | 15.00% | 20.00% | 15.00% | 15.00% |
| Initiator of component A | A-1 | | | | | | | | | |
| | A-2 | | | | | | | | | |
| | A-3 | | | | | | | | | |
| | A-4 | | | | | | | | | |
| | A-5 | | | | | | | | | |
| | A-6 | | | | | | | | | |
| | A-7 | | | | | | | | | |
| | A-8 | | | | | | | | | |
| | A-9 | | | | | | | | | |
| | A-10 | | | | | | | | | |
| | A-11 | | | | | | | | | |
| | A-12 | 5.00% | | 9.00% | 8.00% | 8.00% | 25.00% | 2.00% | 2.00% | 20.00% |
| Another initiator | TPO | 5.00% | | | | | | | | |
| Sensitizer | TX | 1.00% | 5.00% | | 1.00% | 1.00% | 1.00% | 1.00% | 1.00% | 1.00% |
| | DETX | 1.00% | | | | | | | | |
| Polymerization inhibitor | UV22 | 0.40% | 0.40% | 0.40% | 0.40% | 0.40% | 0.40% | 0.40% | 0.40% | 0.40% |
| Surface conditioner | BYK-377 | 0.50% | 0.50% | 0.50% | 0.50% | | 0.50% | 0.50% | 0.50% | 0.50% |
| Evaluation results | Total | 100.0% | 100.0% | 100.0% | 100.0% | 100.0% | 100.0% | 100.0% | 100.0% | 100.0% |
| | Viscosity (cps(25°C)) | 17.2 | 19.5 | 13.5 | 17.5 | 23.1 | 105.1 | 11.2 | 42.1 | 55.1 |
| | Surface tension (mN/m(25°C)) | 22.0 | 22.2 | 22.1 | 22.1 | 33.5 | 22.1 | 22.1 | 22.1 | 22.1 |
| | Average particle size (D50)nm | 140 | 150 | 140 | 160 | 160 | 150 | 150 | 150 | 160 |
| | LED curability | ○ | × | × | × | ○ | ○ | × | × | × |
| | Metal halide lamp curability | ○ | × | × | × | ○ | ○ | × | × | × |
| | Migration resulting from initiator | × | Evaluation impossible | Evaluation impossible | Evaluation impossible | ○ | ○ | Evaluation impossible | Evaluation impossible | Evaluation impossible |
| | Total mass of components A and D (%) | 10.00% | 10.00% | 19.00% | 8.00% | 18.00% | 55.00% | 4.00% | 27.00% | 22.00% |
| | A/D mass ratio | 1.00 | 0.00 | 0.90 | | 0.80 | 0.83 | 1.00 | 0.08 | 10.00 |

In the examples of an ink composition according to the present invention, the ink composition according to the present invention had appropriate viscosity and surface tension, had high LED curability and metal halide lamp curability, and did not cause migration.

In contrast, migration occurred in Comparative Example 1 in which the initiator and the sensitizer were not polymers. Comparative Examples 2 and 3 in which any one of the polymeric initiators and the polymeric sensitizer was used had low LED curability and metal halide lamp curability and could not be rated in terms of migration resulting from the initiator. Comparative Example 4, which contained no amine-modified oligomer, had low LED curability and metal halide lamp curability. Also, in Comparative Example 5, which contained no surface conditioner, dots were less likely to wet and spread due to excessively high surface tension.

In Comparative Example 6, in which the total content of the polymeric initiator and the amine-modified oligomer in the ink composition was more than 40%, the ink composition had a viscosity of more than 100 cps and was difficult to use as an inkjet ink. Comparative Example 7, in which the total content was less than 5%, had low LED curability and metal halide lamp curability. Also, comparative Examples 8 and 9, in which the polymeric initiator/amine-modified oligomer ratio was out of the range of 1/9 to 9/1, also had low LED curability and metal halide lamp curability.

## Claims

1. A photocurable inkjet ink composition comprising the following A to E, wherein a ratio A/D ranges from 1/9 to 9/1, a total content of A and D in the ink composition ranges from 5 to 40%, and in the ink composition, a content of a photopolymerization initiator with a molecular weight of less than 500 is less than 0.2%, a viscosity is 100 cps or less, and a surface tension is 32.0 mN/m or less:
A. an ethylenic unsaturated bond-containing polymeric initiator of photopolymerization,
B. a thioxanthone-based polymeric photosensitizer with a molecular weight of 500 or more,
C. a (meth)acrylate-based polymerizable compound,
D. an amine-modified photopolymerizable oligomer with a weight-average molecular weight in the range of 500 to 3,000 and a viscosity of less than 4,000 cps, and
E. a surface conditioner.

2. The photocurable inkjet ink composition according to claim 1, wherein a content of a sensitizer with a molecular weight of less than 500 is less than 0.2%.

3. The photocurable inkjet ink composition according to claim 1 or 2, comprising a pigment with an average particle size of 500 nm or less.
